# EUROPEAN PATENT SPECIFICATION

(11) **EP 0 237 074 B1**
(45) Date of publication and mention of the grant of the patent: **17.02.1993**
(21) Application number: 87103612.5
(22) Date of filing: 12.03.1987
(51) Int. Cl.: B01J 20/18, B01D 53/02

(54) **Process for separating oxygen from air**
Verfahren zur Sauerstofftrennung von Luft
Procédé pour la séparation d oxygène de l air

(30) Priority: 13.03.1986 JP 53795/86
(43) Date of publication of application: 16.09.1987
(73) Proprietor: Tosoh Corporation, Shinnanyo-shi, Yamaguchi-ken, 746 (JP)
(72) Inventor: Inaoka, Wataru, Shinnanyo-shi Yamaguchi (JP); Aimoto, Michiyuki, Kudamatsu-shi Yamaguchi (JP); Morishita, Satoru, Toyama-shi Toyama (JP); Tsunoda, Hiroichi, Izumi-gun Toyama (JP)
(74) Representative: VOSSIUS & PARTNER

(56) References cited:
- GB-A- 1 169 084
- LU-A- 41 098
- US-A- 3 239 471
- US-A- 3 979 335

## Description

The present invention relates to a process for separating oxygen in air using a molded zeolite body as adsorbing separating agent

A zeolite is a crystalline aluminosilicate having fine pores having a size on the molecule order of several angstroms. Zeolites are inherently naturally produced, but at present, a variety of zeolites inclusive of those having a structure not naturally present are artificially synthesized. Generally, natural zeolites are obtained in the form of pulverized products and synthetic zeolites are obtained in the powdery form. Industrially, zeolites are used as ion exchange agents, adsorbing separators or catalysts. In these applications, a pulverized or powdery zeolite is seldom used, and in general, zeolites are used in the form of molded bodies having a certain strength because they are packed in columns.

GB-A-1,169,084 teaches that the adsorption characteristics of zeolite particles are improved by contacting fresh bindered zeolite particles with liquid water at a temperature below 175°C and then drying the particles at a temperature of about 200 to 375°C before using the particles to separate strait chain hydrocarbons. However, this reference teaches nothing about adsorption of nitrogen in air, and further, refers to type A zeolites, but does not specifically disclose a 5A type zeolite.

US-A-3,239,471 teaches that the mechanical strength of a pelleted zeolite catalyst can be improved by compressing an incompletely hydrated zeolite into pellets, calcining at above 700°F, rehydrating the zeolite, ammoniating the pellets and recalcining the ammoniated pellets at about 650 to 1,200°F. This reference however teaches nothing about adsorption of nitrogen in air nor the use of a molded 5A type zeolite, which is prepared by calcining 5A type zeolite, hydrating the zeolite and, without ammoniation thereof, heating the hydrated zeolite.

A molded 5A type zeolite body is ordinarily prepared in the following manner. First, synthesized Na-A zeolite powder is ion-exchanged in an aqueous solution containing calcium ions, for example, an aqueous calcium chloride solution, to exchange at least 33%, preferably at least 67% of the sodium ions with calcium ions and whereby a zeolite having a pore diameter of about 5 angstroms is formed. The thus obtained 5A type zeolite is dried and mixed with a binder, for example, a clay binder or an organic binder such as carboxymethyl cellulose, and water. The mixture is sufficiently kneaded and then molded according to a customary molding method such as extrusion molding. The molded body is calcined at a temperature of 300° to 800°C to form a molded 5A type zeolite body having a certain strength. The thus-prepared molded 5A type zeolite body is used as an adsorbing separator, for example, for selectively adsorbing and separating n-paraffin from a hydrocarbon mixture, for separating n-butylene as the starting material for the preparation of butadiene from a butane-butylene fraction, or for separating oxygen from air or concentrating oxygen in air.

The separation and concentration of oxygen in air will now be described in detail. The operation of separating and concentrating oxygen in air by using an adsorbing separator such as a zeolite is ordinarily carried out according to the pressure swing adsorption-desorption method (PSA), in which a pressure difference such as normal pressure - reduced pressure or increased pressure - normal pressure is produced for the separation. This method is described in detail, for example, in "Pressure Swing Cycle System" published by Kodansha, Japan. Here, this method will be briefly explained. Air is circulated for a short time in an adsorption column packed with an adsorbing separator to selectively adsorb and separate nitrogen and thus obtain oxygen having a high purity (adsorbing step). Subsequently, nitrogen adsorbed in the adsorbing separator is discharged by a pressure-reducing operation to regenerate the adsorbing separator (regenerating step). Then, the pressure is elevated to a level substantially equal to the adsorption pressure (pressure-restoring step), and the process returns to the adsorbing step. One cycle consists of the adsorbing step, the regenerating step, and the pressure-restoring step. Ordinarily, three adsorbing columns are used for successively conducting these steps. The time of the operation of each step is short and is ordinarily 1 minute.

Accordingly, the adsorbing separator must have properties such that nitrogen is adsorbed and separated in an amount as large as possible at the adsorbing step, the adsorbed nitrogen is promptly desorbed at the regenerating step, and the amount of nitrogen left in the adsorbing separator is as small as possible. Namely, the nitrogen adsorption capacity must be large and the rate of adsorption and desorption must be high. With reference to the adsorption isotherm, the nitrogen adsorption capacity must be high under the adsorption pressure, and must be low under the regeneration pressure. In this sense, an adsorbing separator having a large effective adsorption capacity to nitrogen is desired.

In the case of a molded zeolite body prepared according to the conventional process, if the adsorption capacity is high under the adsorption pressure, the adsorption capacity is relatively high also under the regeneration pressure.

The oxygen generating power unit (KWh/Nm³) is used as an economical factor in the separation and concentration of oxygen from air. The value is obtained by dividing the power required for separating and concentrating oxygen from air by the amount of oxygen obtained. Low-temperature separation has long been adopted for obtaining oxygen from air, and the oxygen generating power unit of this separation process is 0.4 KWh/Nm³. In the case where a molded 5A type zeolite body prepared according to the conventional process is used for PSA as the adsorbing separator, the oxygen generating power unit is 0.6 KWh/Nm³ when a product oxygen gas having an oxygen concentration of 93% by volume is obtained. Obviously, this value is not sufficiently small. This is mainly because the nitrogen adsorption capacity under the regeneration pressure is relatively high.

It is the object of the present invention to provide a process for separating oxygen from air using an adsorbing separator which shows a reduced adsorption capacity under the regeneration pressure while maintaining the adsorption capacity under the adsorption pressure at the same level as attained in the conventional technique. This object is solved by the process as disclosed in claims 1-3.

As factors having influences on the adsorption capacity of the molded zeolite body, there may be considered the kind of cation contained, the calcination temperature , the shape and the like. However according to the present invention it was found that a molded zeolite body satisfying the above-mentioned requirements can be obtained by very simple means, that is, by a process comprising hydrating a molded and calcined zeolite body and then heating the hydrated body.

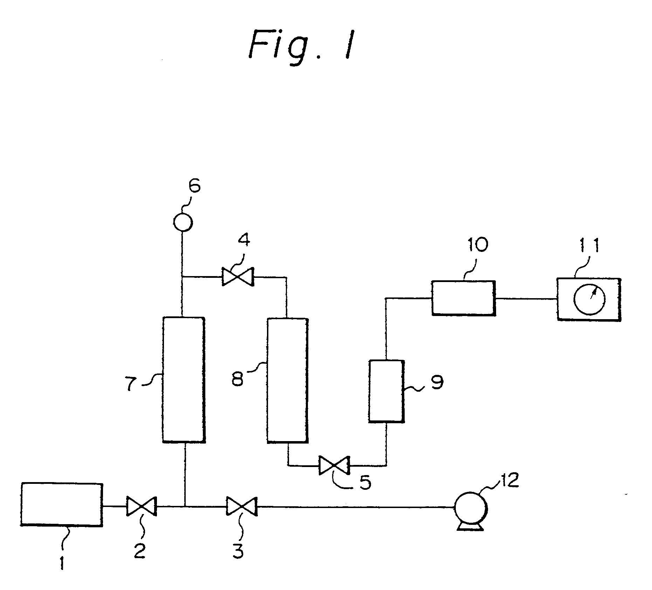

Figure 1 is a schematic diagram illustrating an apparatus for the dynamic evaluation of an adsorbing separator.

When the molded 5A type zeolite prepared according to the present invention is used as an adsorbing separator for separating and concentrating oxygen from air, a much higher effect than the effect attainable by conventional adsorbing separators can be attained.

The molded and calcined bodies to be treated in the present invention may be those which are obtained by the conventional processes. For example, a molded zeolite body prepared by mixing a zeolite powder with an inorganic binder and/or an organic binder, molding the mixture, drying the molded body, and calcining the molded body at 300 to 800°C may be used.

According to the present invention, this molded and calcined body is hydrated. The hydration degree is not particularly critical, so long as the water content in the hydrated body is at least 3% by weight based on the dry body. The upper limit is not critical, but preferably the water content in the hydrated body is 10 to 20% by weight. The molded body must be uniformly hydrated, although the method for attaining a uniform hydration is not particularly limited. The hydrated body is then heated. The heating temperature may be 300 to 500°C and the temperature need not be strictly controlled. Preferably, the heat treatment is carried out for at least 30 minutes, more preferably 30 minutes to 3 hours. The presence or absence of circulation of air and the heating method are not particularly critical.

The molded zeolite body prepared by the process of the present invention is useful for the separation of oxygen in air according to the pressure swing adsorption-desorption method. In this method, air is contacted with the prepared molded zeolite body whereby nitrogen is selectively adsorbed to obtain oxygen having a high purity. More specifically, air is circulated for a short time in an adsorption column packed with the prepared molded zeolite (adsorption step). For example, in the case of the normal pressure - reduced pressure method, air maintained at normal temperature is passed through the adsorption column at a pressure of about 0.3 bar (0.3 kg/cm²)G whereby product oxygen having a purity of 93% is obtained. Subsequently, nitrogen adsorbed by the molded zeolite is discharged by reducing the pressure to approximately 26660 Pa (200 mmHg) by a vacuum pump whereby the molded zeolite is regenerated (regenerating step). Then, the pressure is elevated to a level substantially equal to the adsorption pressure by supplying the product oxygen (pressure-restoring step), and thus the process returns to the adsorbing step.

The invention will now be illustrated by, but is by no means limited to, the following examples.

In the examples, the static adsorption capacity and the product oxygen recovery rate were determined as follows.

### Static Measurement of Adsorption Capacity

The static adsorption capacity was measured according to the weight method. For the preliminary treatment, the molded body was activated under a vacuum of 0.13 Pa (10⁻³ mmHg) or less at 350°C for 2 hours. The adsorption temperature was maintained at 18°C, and nitrogen gas was introduced and the adsorpton capacity (Ncc/g) was calculated from the change of the weight caused after the attainment of a sufficient equilibrium.

### Dynamic measurement of Oxygen Recovery Rate

The recovery rate of the product oxygen gas and the oxygen concentration were determined by using a dynamic evaluation apparatus shown in Fig. 1 according to the following procedures.

The adsorption temperature was maintained at 18°C. About 300 g of the molded zeolite body was packed in an adsorption column 7. At the adsorption step, compressed air having a pressure of about 0.3 bar (0.3 kg/cm²)G was circulated in the adsorption column by a blower 1 while opening electromagnetic valves 2, 4, and 5. The flow rate was adjusted by a flow meter 9. At the regeneration step, the electromagnetic valves 2, 4, and 5 were closed, an electromagnetic valve 3 was opened, and the pressure was reduced by a vacuum pump 12. The pressure was controlled to 20 000 Pa (150 mmHg). At the pressure-restoring step, the electromagnetic valve 3 was closed and the electromagnetic valve 4 was opened, and the pressure in the adsorption column 7 was restored by a product oxygen gas in an accumulator column 8. The time for each step was adjusted to 1 minute. The operation of the electromagnetic valves was controlled by a sequencer. The oxygen concentration of the product gas was read by an oxygen concentration meter 10 when the value of the oxygen concentration became constant, and a precise product oxygen gas recovery rate (Nl/min·kg) was calculated from the value on an integrating flow meter 11. The pressure was measured by a pressure gauge 6.

### Comparative Example 1

Synthesized Na-A type zeolite powder was ion-exchanged in an aqueous solution of calcium chloride and was then dried to obtain a 5A type zeolite having a calcium exchange ratio of 70%. Then a clay mineral, carboxymethyl cellulose, and water were added to the zeolite, and the mixture was molded and calcined at 550°C for 2 hours to obtain a molded 5A type zeolite body. When the nitrogen adsorption capacity of the molded body was measured according to the static adsorption capacity measurement method, it was found that the nitrogen adsorption capacity was 12.2 Ncc/g under an adsorption pressure of 105 300 Pa (790 mmHg) and 3.6 Ncc/g under an adsorption pressure of 20 000 Pa (150 mmHg). When the oxygen recovery rate was measured according to the dynamic evaluation method, it was found that the recovery rate was 0.9 Nl/min·kg at an oxygen concentration of 93% by volume.

### Example 1

The molded 5A type zeolite body obtained in Comparative Example 1 was hydrated to an extent such that the water content in the hydrated molded body was 20% by weight based on the dry body, and about 300 g of the hydrated body was packed in a tube having an inner diameter of 40 mm and heat-treated at 350°C for 60 minutes while circulating air at 8 Nl/min. The nitrogen adsorption capacity of the thus-obtained molded body was 11.6 Ncc/g under an adsorption pressure of 105 300 Pa (790 mmHg) and 2.7 Ncc/g under an adsorption pressure of 20 000 Pa (150 mmHg). The oxygen recovery rate was 1.1 Nl/min·kg at 150 mmHg. The oxygen recovery rate was 1.1 Nl/min·kg at an oxygen concentration of 93% by volume.

### Example 2

The molded 5A type zeolite body obtained in Comparative Example 1 was hydrated to an extent such that the water content in the hydrated body was 10% by weight based on the dry body, and the hydrated body was heat-treated at 400°C for 90 minutes in a muffle furnace without a circulation of air. The nitrogen adsorption capacity of the thus-obtained molded body was 11.5 Ncc/g under an adsorption pressure of 105 300 Pa (790 mmHg) and 2.6 Ncc/g under an adsorption pressure of 20 000 Pa (150 mmHg). The oxygen recovery rate was 1.05 Nl/min·kg at an oxygen concentration of 93% by volume.

### Example 3

The molded 5A type zeolite body obtained in Comparative Example 1 was hydrated to an extent such that the water content in the hydrated body was 3% by weight based on the dry body, and the hydrated body was heat-treated under the same conditions as adopted in Example 2. The nitrogen adsorption capacity was 11.9 Ncc/g under an adsorption pressure of 105 300 Pa (790 mmHg) and 3.3 Ncc/g under an adsorption pressure of 20 000 Pa (150 mmHg). The oxygen recovery rate was 0.95 Nl/min·kg at an oxygen concentration of 93% by volume.

As shown in the above-mentioned examples, when the adsorption capacity of the molded 5A type zeolite body prepared according to the conventional process (hereinafter referred to as "molded body A") and the nitrogen adsorption capacity of the molded body prepared according to the process of the present invention (hereinafter referred to as "molded body B") were measured according to the static adsorption capacity measurement method, it was found that there was no substantial difference between the nitrogen adsorption capacity of the molded body B of the present invention and that of the conventional molded body A under the adsorption pressure, but the nitrogen adsorption capacity of the molded body B of the present invention under the regeneration pressure is lower by at least 20% than that of the conventional molded body A.

When the dynamic characteristics were measured according to the dynamic evaluation method, it was found that the recovery rate of a product gas having an oxygen concentration of 93% by volume is 0.9 Nl/min·kg in the conventional molded body A, but this rate is 1.0 to 1.1 Nl/min·kg in the case of the molded body B of the present invention, and thus an increase of 10 to 20% is attained. An increase of the recovery rate of the product gas means a reduction of the oxygen generating power unit. By simple calculation it is confirmed that the oxygen generating power unit of the conventional molded body A is 0.6 KWh/Nm³, but the value can be reduced below 0.5 KWh/Nm³ in the case of the molded body B of the present invention. Furthermore, if the PSA system is improved so that the adsorption characteristics of the molded body B of the present invention are effectively utilized, for example, if the operation conditions such as the adsorption pressure and adsorption time are optimized, it is expected that the oxygen generating power unit will be further reduced.

As is apparent from the foregoing description, the process of the present invention using a molded zeolite body prepared as described above is very advantageous over the conventional process in that the adsorption-desorption treatment power unit is reduced.

## Claims

1. A process for separating oxygen from air according to the pressure swing adsorption-desorption method, comprising the steps of
a) Providing a molded zeolite body by molding a 5A type zeolite, calcining the thus-molded 5A type zeolite Body, hydrating the thus-calcined 5A type, zeolite body, and finally heating the thus-hydrated 5A type zeolite body at a temperature of 300 to 500°C;
b)contacting air with the molded zeolite body for selectively adsorbing nitrogen on the molded zeolite body to separate oxygen from the air; and
c)desorbing the adsorbed nitrogen from the molded zeolite body.

2. The process according to claim 1, wherein the calcined 5A type zeolite is hydrated to an extent such that the water content is 3 to 20% by weight based on the dry body.

3. The process according to claim 2, wherein the hydrated 5A type zeolite is heated for at least 30 minutes.

## Patentansprüche

1. Verfahren zur Abtrennung von Sauerstoff aus Luft nach dem Druckwechseladsorptions/desorptions-Verfahren, umfassend die Schritte:
a) Bereitstellen eines Zeolithformkörpers durch Formen eines Zeolithen vom 5A-Typ, Brennen des geformten Zeolithkörpers vom 5A-Typ, Hydratisieren des gebrannten Zeolithkörpers vom 5A-Typ und abschließendes Erhitzen des hydratisierten Zeolithkörpers vom 5A-Typ bei einer Temperatur von 300 bis 500°C;
b) Inkontaktbringen des Zeolithformkörpers mit Luft um Stickstoff am Zeolithformkörper selektiv zu adsorbieren und so Sauerstoff aus der Luft abzutrennen und
c) Desorption des adsorbierten Stickstoffs vom Zeolithformkörper.

2. Verfahren nach Anspruch 1, wobei der gebrannte Zeolith vom 5A-Typ soweit hydratisiert wird, daß der Wassergehalt 3 bis 20 Gewichts-%, bezogen auf den trockenen Körper, beträgt.

3. Verfahren nach Anspruch 2, wobei der hydratisierte Zeolith vom 5A-Typ mindestens 30 Minuten lang erhitzt wird.

## Revendications

1. Procédé de séparation de l'oxygène à partir de l'air selon le procédé par adsorption-désorption sous pression alternée, selon lequel :
(a) on prépare un corps zéolitique moulé, en moulant une zéolite de type 5A, en calcinant la zéolite de type 5A ainsi moulée, en hydratant le corps zéolitique de type 5A ainsi calciné, et en chauffant finalement le corps zéolitique de type 5A ainsi hydraté, à une température de 300 à 500 °C ;
(b) on met en contact de l'air avec le corps zéolitique moulé, afin d'adsorber sélectivement l'azote sur le corps zéolitique moulé, et séparer l'oxygène de l'air ; et
(c) on désorbe l'azote adsorbé à partir du corps zéolitique moulé.

2. Procédé selon la revendication 1, dans lequel la zéolite de type 5A calcinée, est hydratée dans une mesure telle que la teneur en eau est de 3 à 20 % en poids par rapport au corps sec.

3. Procédé selon la revendication 2, dans lequel la zéolite de type 5A hydratée est chauffée pendant au moins 30 mn.
